# EUROPEAN PATENT SPECIFICATION

(11) **EP 4 314 409 B1**
(45) Date of publication and mention of the grant of the patent: **18.06.2025**
(21) Application number: 22718204.5
(22) Date of filing: 25.03.2022
(51) Int. Cl.: D21H 27/10, D21H 19/06, D21J 3/10, B29D 22/00, B65D 1/02, B65D 23/08

(54) **A METHOD FOR PROVIDING A NON-UNIFORM BARRIER COATING ON A HOLLOW CONTAINER COMPRISING MOLDED PULP**
VERFAHREN ZUR BEREITSTELLUNG EINER UNGLEICHMÄSSIGEN SPERRBESCHICHTUNG AUF EINEM HOHLEN BEHÄLTER MIT GEFORMTER PULPE
PROCÉDÉ DE FOURNITURE D'UN REVÊTEMENT DE BARRIÈRE NON UNIFORME SUR UN RÉCIPIENT CREUX COMPORTANT DE LA PULPE MOULÉE

(30) Priority: 31.03.2021 EP 21166394
(43) Date of publication of application: 07.02.2024
(73) Proprietor: Alpla Werke Alwin Lehner GmbH & Co. KG, 6971 Hard (AT)
(72) Inventor: SANDBERG, Lars, 663 41 Hammarö (SE); BOISSARD, Yselaure, 703 62 Örebro (SE); YAMADA, Shoko, 218 45 Vintrie (SE)
(74) Representative: Kransell & Wennborg KB
(86) International application number: PCT/EP2022/057990
(87) International publication number: WO 2022/207508

(56) References cited:
- WO-A1-2010/144340
- WO-A1-2019/175610
- US-A- 5 997 643

## Description

### TECHNICAL FIELD

The present disclosure generally relates to a method for providing a non-uniform barrier coating on a hollow container comprising molded pulp. The method comprises depositing a polymeric powder on the interior container surface in at least one predetermined portion of the hollow container and subsequently treating the container with heat or irradiation. The present disclosure also relates to a hollow container comprising a non-uniform polymeric powder coating.

### BACKGROUND

Plastic containers, packaging trays and bottles are extensively used for storing food products, such as flowable food and beverages. Plastic articles can be easily molded, stretched, and produced at a relatively low cost. However, the use of plastics is associated with environmental concerns. In order to relieve the environmental burden, attempts have been made to replace plastic containers and bottles with renewable materials, such as molded pulp.

Shaped pulp products, such as paper containers and bottles may be formed by feeding pulp, e.g. paper pulp into a split mold and subsequently dewatering the pulp with heat and/or pressure, as disclosed in i.a. WO16055072.

Although paper is regarded as a sustainable packaging material, paper has a number of drawbacks, compared to traditional plastics. Paper is generally more permeable to gases, grease, and moisture. Long-time exposure to moisture, as is typically the case during storage of beverages, may lead to deterioration of the inner walls of the paper container.

To that end, the inner walls of the paper container may be coated with a barrier coating to protect the container from deteriorating due to liquid and moist exposure. Barrier coatings may also be used to control the humidity, sealing properties, aroma etc. of the container.

A barrier coating typically comprises polymers, such as polyolefin polymers, and may be applied to the inner container walls in various ways, e.g. by extrusion coating or applied as liquid coatings.

If the molded pulp product is shaped as a hollow container, e.g. as a jar, tray, cup, bowl or a bottle, certain interior areas of such a container may require extra barrier protection. For example, in the case of a generally cylindrical container or a bottle, it may be desired to have extra "protection" close to the opening of the container, which may also be referred to as the "neck portion". This part is typically exposed to moisture and liquid during use, e.g. when drinking or pouring from the container. Furthermore, this part is often sealed by a cap or a foil seal, which poses demands on this part during use and during manufacturing.

Furthermore, in instances where the container is to be provided with a label or a print, the interior surface of the container should be able to resist the stresses associated with such labelling and printing.

Furthermore, if the bottom surface of the container is non-flat or comprises sharp dents or edges, such parts may benefit from extra barrier protection.

Accordingly, there is a need to provide a means to protect the interior parts of a molded pulp container in a more controlled manner, such that the container can withstand the exposure to moist and liquid as well as demands posed on the container during manufacturing, handling and transport.

### SUMMARY

In view of the above, there is a need to provide an improved and more controlled means to protect specific areas of a hollow container during use.

According to a first aspect, there is provided a method for providing a non-uniform barrier coating on a hollow container, as defined in claim 1, and comprising:
a) providing a hollow container comprising molded pulp, wherein the hollow container comprises a bottom portion, a main portion and an upper portion, wherein the main portion is arranged between the bottom portion and the upper portion, wherein the hollow container comprises a bottom surface and sidewalls extending from the bottom surface to an opening of the hollow container; the sidewalls and the bottom surface defining an exterior surface and an interior surface of the hollow container,
b) depositing a polymeric powder onto the interior surface in at least one predetermined portion of the hollow container by means of a spraying device capable of charging the polymeric powder prior to or during deposition of the polymeric powder, wherein at least the predetermined portion is grounded,
c) treating the hollow container with heat or irradiation under conditions that melt and/or cure the polymeric powder,
wherein the electrical conductivity of the at least one predetermined portion is higher than the electrical conductivity of the remaining portions of the hollow container during the polymeric powder deposition step b).

The present disclosure is based on the realization that a non-uniform barrier coating may be provided on the interior container walls by means of varying the electrical conductivity across the container. The thickness of the barrier coating may be controlled and selectively steered such that the most vulnerable parts of the container; i.e. the predetermined portion(s) are protected in a more efficient manner. Such vulnerable parts may for example be parts of the container largely exposed to moisture and liquid, or parts that are more sensitive to harm during manufacturing, transport or use of the container.

In the method of the present disclosure, the polymeric powder particles are electrically charged by means of the spraying device, and due to its negative (or positive) electric charge, the powder will seek a grounded surface which has a more positive (or negative) charge. Accordingly, the polymeric powder particles will be electrically attracted to the interior surface of the predetermined portion(s) of the hollow container. The charged polymeric powder particles will predominantly adhere to the predetermined portion(s) of the interior surface; i.e. the interior walls which have a higher electrical conductivity. However, the powder may also adhere to the remaining parts of interior surface of the container. For example, a thinner barrier coating may be provided in these parts.

A barrier coating formed from a polymeric powder is advantageous as this coating technique reduces the emission of volatile organic compounds (VOC) and coating waste. It is also a simple and relatively quick coating technique.

A powder coating is a dry, finely divided solid material that is commonly used on electrically conductive metal substrates. The deposition of a powder coating onto a molded pulp substrate is, however, challenging due to the inherent non-conductive properties of such a substrate. The coating is not assisted by electrostatic attraction, which typically results in poor adhesion of the powder to the substrate. By implying means to render the predetermined portion(s) of container electrically conductive, a non-uniform barrier coating may be accomplished. The barrier coating may be configured to cover the entire interior surface of the sidewalls, but the coating applied to the predetermined portion(s); i.e. the portion(s) that typically require most "protection" will be thicker.

The coating is thereafter subject to treatment or irradiation under conditions that melt or cure the polymeric powder. Accordingly, a durable protective barrier coating is formed, wherein the thickness of the coating varies in selected parts on the interior surface of the hollow container

In embodiments, the hollow container extends along a longitudinal center line, wherein the longitudinal extension of the bottom portion corresponds to 5-30% of the maximum longitudinal extension of the hollow container, the longitudinal extension of the main portion corresponds to 40-80% of the maximum longitudinal extension of the hollow container, and the longitudinal extension of the upper portion corresponds to 5-30% of the maximum longitudinal extension of the hollow container.

Accordingly, the main portion of the container is typically the largest portion of the hollow container.

In embodiments, the at least one predetermined portion of the hollow container is arranged in contact with a grounded electrically conductive material during the step b) of polymeric powder deposition.

The electrically conductive material is typically arranged to contact, but not adhere to the exterior surface of the predetermined portion(s) of the hollow container. The container is grounded in at least the predetermined portion(s), which allows the powder to become attracted to these parts. The electrically conductive material secures that the electrical charge carried by the grounded surface will be spread across a larger area.

The predetermined portion may form part of the upper portion, main portion, and/or the bottom surface of the hollow container.

These portions of the hollow container may benefit from a thicker barrier coating. A thicker coating at the bottom surface may e.g. be advantageous to protect sharper edges and dents resulting from e.g. orientation lugs, or a non-flat bottom surface construction. Furthermore, a thicker coating may also be advantageous in a predetermined portion of the main portion of the hollow container, e.g. in a location where a label or print is to be applied.

In embodiments, the upper portion of the hollow container comprises a shoulder portion and a neck portion, wherein the neck portion has a smaller cross-sectional area than the main portion and is configured to circumferent at least the opening of the container, and wherein the shoulder portion is arranged to taper between the main portion and the neck portion.

Accordingly, the hollow container may be shaped as a bottle.

The predetermined portion(s) may form part of the shoulder portion and/or the neck portion of the hollow container; i.e. the bottle.

Depending on the circumstances, the barrier coating may be thicker in more than one predetermined portion of the container.

Hence, in exemplary embodiments, the electrical conductivity is higher in at least two predetermined portions of the hollow container, wherein a first predetermined portion forms part of the neck portion, and wherein the second predetermined portion forms part of the main portion, shoulder portion or the bottom surface of the hollow container during the polymeric powder deposition step b).

The neck portion is configured to circumferent the opening of the bottle. This portion is typically exposed to moist and liquid during drinking and pouring from the container. Furthermore, this part is typically sealed by a cap or a foil seal, and it may therefore be beneficial to have a thicker coating in this part of the container.

In embodiments, the electrically conductive material is an electrically conductive wire, e.g. a metal wire configured to be wrapped around the at least one predetermined portion during the polymeric powder deposition step b).

The electrically conductive wire is grounded and may be wrapped around a larger surface area or smaller surface area, depending on the specific need, purpose, and application. The electrically conductive wire secures that a thicker coating is evenly applied in the predetermined portion(s).

In embodiments, the electrically conductive material is an electrically conductive molding device configured to enclose the at least one predetermined portion during the polymeric powder deposition step b), wherein the at least one predetermined portion forms part of the main portion and/or the shoulder portion of the hollow container.

Accordingly, a larger part of the interior surface of the hollow container is provided with a thicker barrier coating. Furthermore, the molding device secures that an even, thicker coating is applied across the interior surface of the predetermined portion(s). The molding device may e.g. comprise a metal, such as aluminum.

In embodiments, the method further comprises the step of:
b') depositing a polymeric powder onto the exterior surface of at least a portion of the upper portion of the hollow container by means of the spraying device.

Accordingly, also the exterior surface of the upper portion will be coated with the polymeric powder. This is beneficial as this part is exposed to repeated moisture and liquid during drinking, pouring, and attaching and detaching of a cap. Preferably, the neck portion of the container is provided with a barrier coating.

In embodiments, the polymeric powder deposition step b') is performed prior to the step c) of heating or irradiating the hollow container.

This allows for significant savings and time and facilitates the processability of the method. Typically, during spray coating, a curing or melting step is required after each spraying step. A hollow container formed according to the method of the present disclosure only requires one step of heat or irradiation treatment after the interior surface and the exterior surface of a portion of the upper portion have been coated. Accordingly, significant savings in time and costs, and a more simplified method is provided.

In embodiments, the hollow container has a moisture content of from 3 to 15%, e.g. from 5 to 10% during the step b) of powder deposition.

The "moisture content" refers to the amount of water contained in the molded pulp container expressed as the percentage of the total weight of the molded pulp container. The moisture content is typically measured at a temperature of about 20°C.

A moisture content in the above mentioned range allows for an even polymeric powder coating to be applied. If the moisture content is too high, the surface of the hollow container may repel the polymeric powder, and thereby yield an uneven coating. If the moisture content is too low, the polymeric powder may not adhere properly to the surface of the hollow container.

In embodiments, the method comprises the additional step of conditioning the hollow container after step a).

For example, the method may further comprise the step of:
a') conditioning the hollow container at an ambient relative humidity of from 30 to 100% after step a) of providing a hollow container comprising molded pulp.

The inventors have found that the moisture content of the hollow container has an impact on the distribution of the polymeric powder coating on the interior surface of the container sidewalls. For example, if a more localized coating distribution is desired, the moisture content may be lower. If an even coating, distributed on a larger surface is desired, the moisture content may be higher. This may e.g. be tailored by conditioning the hollow container in different conditions. For example, the ambient relative humidity during conditioning may be in the range of from 30 to 55% in cases where a localized coating distribution is desired, and e.g. from 60 to 100%, such as from 75 to 95 % if a more evenly distributed coating is desirable. In the latter case, the interior barrier coating may then be applied across the entire interior surface, but will be thicker in the predetermined portions where the electrical conductivity is higher.

Also, the moisture content in the above mentioned ranges; i.e. 3 to 15 %, e.g. 5 to 10% allows for the exterior surface of the upper portion of the container to be coated directly after the polymeric powder deposition step b); i.e. prior to curing or melting the polymeric powder. Accordingly, only one heating or irradiation step is required in the method. Therefore, significant savings in time and costs, and a more simplified method is provided.

The moisture content of the hollow container may be selectively steered and controlled depending on the size of the container, the use of the container and the specific purpose of the powder coating. For example, in some situations, it may be desired to provide a thick localized coating in a selected part; i.e. a predetermined portion of the container. In other circumstances, an evenly distributed coating is desired, but with localized thicker regions in specific parts of the container. Also, the proportion of powder coating onto the exterior surface of the upper container can be tailored and adapted to meet the specific needs. By tailoring the moisture content and the conditioning at a specific relative humidity, situation-specific adjustments may be accomplished.

According to another aspect of the present disclosure, there is provided a hollow container, as defined in claim 13, wherein the hollow container comprises a bottom portion, a main portion, and an upper portion, wherein the main portion is arranged between the bottom portion and the upper portion, wherein the hollow container comprises a bottom surface and sidewalls extending from the bottom surface to an opening of the hollow container; the sidewalls and the bottom surface defining an exterior surface and an interior surface of the hollow container, wherein the interior surface of the hollow container comprises a barrier coating comprising a polymeric powder, and wherein the thickness, t1, of the barrier coating in at least one predetermined portion of the hollow container is higher than the thickness, t2, of the barrier coating in the remaining portions of the hollow container.

In embodiments, the upper portion comprises a shoulder portion and a neck portion, wherein the neck portion has a smaller cross-sectional area than the main portion and is configured to circumferent at least the opening of the container, and wherein the shoulder portion is arranged to taper between the main portion and the neck portion, wherein the at least one predetermined portion forms part of the neck portion, shoulder portion, main portion or bottom surface of the hollow container.

The thickness, t1, of the barrier coating in the at least one predetermined portion is at least 10%, preferably at least 20% higher than the thickness, t2, of the barrier coating in the remaining portions of the container.

In embodiments, the exterior surface of at least a portion of the upper portion of the hollow container comprises a barrier coating.

This is advantageous since this part of the hollow container is particularly exposed to moist and liquid during use.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF DRAWINGS

The various aspects of the present disclosure, including its particular features and advantages, will be readily understood from the following detailed description and the accompanying drawings, in which:
Figure 1 schematically illustrates a hollow container, shaped as a bottle, according to an exemplary embodiment of the present disclosure as well as means to selectively apply a polymeric powder coating in predetermined portions of the container.
Figure 2a schematically shows the step of depositing a polymeric powder on the interior surface of the hollow container.
Figure 2b schematically shows the step of depositing a polymeric powder on the exterior surface of the upper portion of the hollow container.

### DETAILED DESCRIPTION

The present disclosure will now be described more fully hereinafter with reference to the accompanying drawings, in which currently preferred embodiments of the present disclosure are shown. The present disclosure may, however, be embodied in many different forms and should not be construed as limited to the embodiments set forth herein; rather, these embodiments are provided for thoroughness and completeness, and fully convey the scope of the present disclosure to the skilled person. Like reference characters refer to like elements throughout.

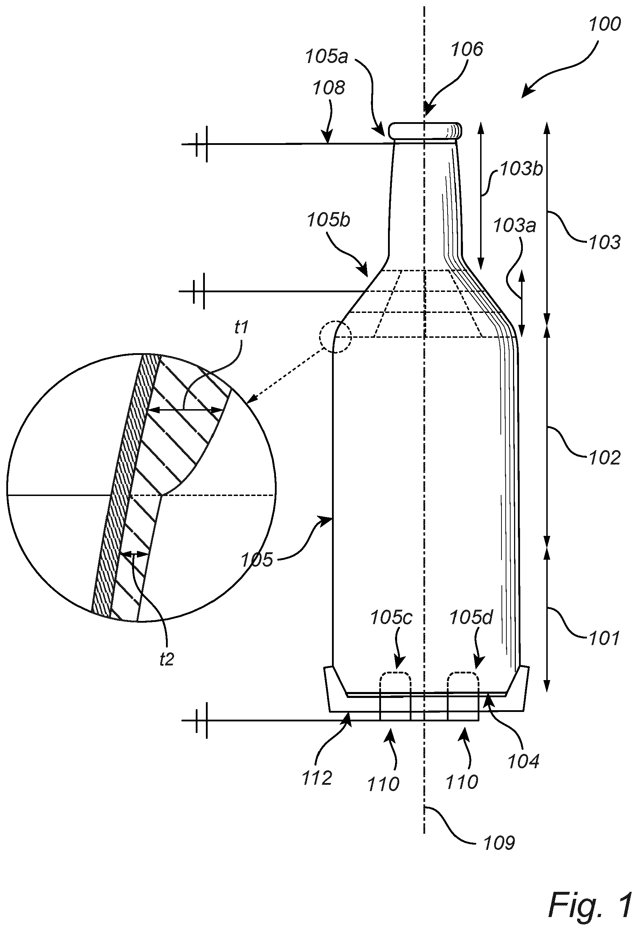

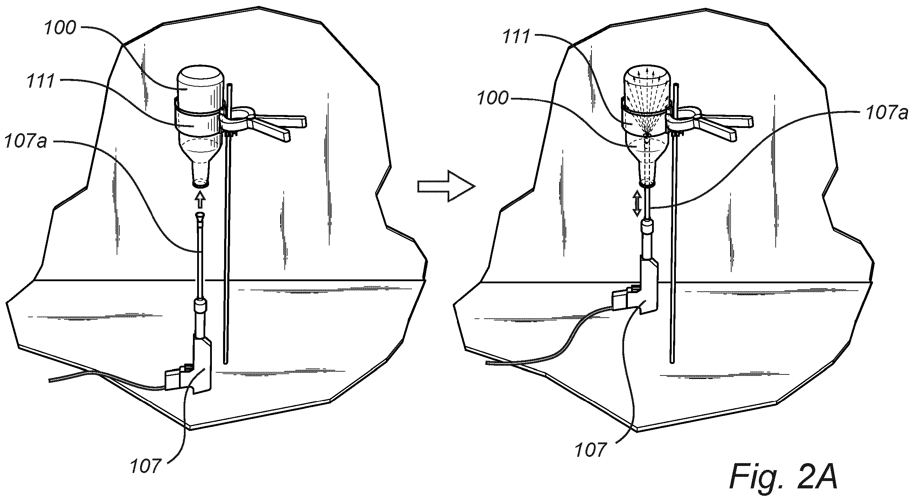

With reference to figures 1 and 2a-b, a method for providing a non-uniform barrier coating on a hollow container is provided. The method comprises
a) providing a hollow container 100 comprising molded pulp, wherein the hollow container 100 comprises a bottom portion 101, a main portion 102 and an upper portion 103, wherein the main portion 102 is arranged between the bottom portion 101 and the upper portion 103, wherein the hollow container comprises a bottom surface 104 and sidewalls 105 extending from the bottom surface 104 to an opening 106 of the hollow container; the sidewalls 105 and the bottom surface 104 defining an exterior surface and an interior surface of the hollow container,
b) depositing a polymeric powder onto the interior surface in at least one predetermined portion 105a-d of the hollow container by means of a spraying device 107 capable of charging the polymeric powder prior to or during deposition of the polymeric powder,
c) treating the hollow container with heat or irradiation under conditions that melt and/or cure the polymeric powder,
wherein the electrical conductivity of the at least one predetermined portion 105a-d is higher than the electrical conductivity in the remaining portions of the hollow container during the polymeric powder deposition step b).

As used herein, the term "hollow container" means any kind of container, such as a jar, tray, cup, bowl or a bottle. In the embodiments illustrated in the figures, the hollow container is a bottle. In embodiments, the hollow container has a rotational symmetry about the longitudinal center line. For example, the shape of the hollow container is generally cylindrical.

As used herein, the term "molded pulp" means a pulp or a pulp mixture that is shaped, pressed and dried. The molded pulp may e.g. be made from paper or wood fibers. For example, the pulp may be a fibrous material produced by mechanically or chemically reducing woody plants to their component parts and then suspended in a fluid, e.g. water.

A "non-uniform" coating is a coating with a thickness gradient. The non-uniform coating is thicker in selected parts; i.e. in at least one predetermined portion of the hollow container.

The "interior surface" of the hollow container is defined by the sidewalls and the bottom surface of the container. The interior surface may also be referred to as the interior walls.

The "exterior surface" is defined by the sidewalls and the bottom surface of the container. The exterior surface may also be referred to as the exterior walls.

The polymeric powder used for coating of the hollow container is not limited.

For example, the powder may comprise a thermoplastic polymer selected from polyolefins, e.g. polyethylene or polypropylene and copolymers thereof, polyamides and polyesters, and copolymers thereof. The polymeric powder may also comprise water soluble synthetic polymers, such as polyvinyl alcohol or polysaccharides, such as cellulose. The powder particles typically have an average size in the range of 1 to 200 µm, e.g. from 5 to 100 µm, e.g. from 10 to 50 µm. These ranges allow for an even coating, and furthermore allow for charging of the polymeric powder particles to be accomplished by the spraying device.

A "predetermined portion" means a portion forming part of the hollow container. The predetermined portion may form part of the upper portion, such as the neck portion, shoulder portion, the main portion and/or the bottom surface of the hollow container. The size of the predetermined portion may vary. The predetermined portion may constitute the entire bottom surface, main portion, neck portion or shoulder portion or only a part thereof. In the context of the present disclosure, a predetermined portion does not mean the entire hollow container, but only a portion thereof.

The hollow container extends along a longitudinal center line 109, wherein the longitudinal extension of the bottom portion 101 corresponds to 5-30% of the maximum longitudinal extension of the hollow container 100, the longitudinal extension of the main portion 102 corresponds to 40-80% of the maximum longitudinal extension of the hollow container 100, and the longitudinal extension of the upper portion 103 corresponds to 5-30% of the maximum longitudinal extension of the hollow container 100.

The step of providing a hollow container comprising molded pulp (step a) may be provided by means known to the skilled person. For example, the hollow container may be provided by depositing a pulp mixture into a mold, e.g. a split-mold, activating a pressing tool, e.g. an impermeable balloon within the interior cavity of the mold such that the pulp assumes the shape of the balloon, thereby forming the interior and exterior sidewalls of the hollow container. The molded pulp may then be drained such that excessive water is removed. A process for providing a hollow container is e.g. described in WO16055073. Other means for providing a hollow container comprising molded pulp are also conceivable.

The hollow container may then be removed from the split-mold, and may be further conditioned prior to applying a powder coating onto the interior walls and, in embodiments, the exterior container walls.

With reference to figure 2a, the step of depositing a polymeric powder (step b)) may be achieved by means of a spraying device 107 capable of charging the polymeric powder prior to or during deposition of the polymeric powder. The spraying device may be a spray gun, but any spraying device capable of charging the powder prior to or during deposition of the powder can be used. The powder is typically charged by corona charging; i.e. the powder particles pass through a charged corona field at the tip or nozzle of the spray gun, which applies a negative (or positive) charge to each of the polymeric powder particles. This allows for the powder particles to strongly adhere to the grounded and electrically conductive surface of the container and stick thereto. The particles will predominantly adhere to the interior surface of the predetermined section(s).

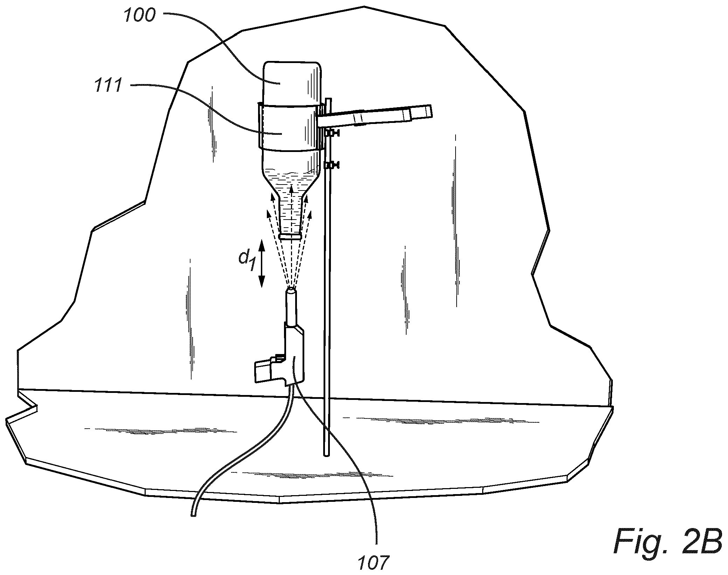

Depositing of the polymeric powder may be achieved by inserting the spraying device 107 or the nozzle 107a of the spraying device into the opening, or by arranging the spraying device or the nozzle in proximity of the opening, during spraying. The charged polymeric powder particles will be electrically attracted to the grounded and electrically conductive interior parts of the hollow container; i.e. the predetermined portions. In figure 2a-b, the predetermined portion forms part of the main portion of the hollow container. The predetermined portion is in this figure enclosed by a grounded electrically conductive molding device 111. The same principles of polymeric powder deposition onto the interior surface (as illustrated in figure 2a) and onto the exterior surface of the upper portion (as illustrated in figure 2b) apply regardless of which predetermined portion is to be coated and regardless of the means to provide such an electrically conductive surface.

The electrical conductivity of the at least one predetermined portion 105a-d is higher than the electrical conductivity in the remaining portions of the hollow container during the polymeric powder deposition step b). Accordingly, a thicker coating will be provided in these portions.

The interior powder coating may be provided by continuously spraying the interior of the hollow container for about 1 to 20, e.g. 2 to 10 seconds. Charged particles are blown from the nozzle 107a towards the interior walls of the container.

In the last step d) of the method of the present disclosure, the hollow container is treated with heat or irradiation under conditions that melt and/or cure the polymeric powder.

When the polymeric powder is exposed to elevated temperatures or to irradiation, e.g. ultraviolet radiation, the deposited polymeric powder coatings soften, melt and/or cure and a continuous barrier coating is provided. Accordingly, a uniform barrier coating, free from pinholes is achieved.

Depending on the characteristics of the polymeric particles and the desirable thickness of barrier coating, the heat treatment step may vary.

In embodiments, the hollow container is subject to heat treatment at a temperature of from 100°C to 300°C, e.g from 120°C to 220°C. The heat treatment time may be between 1 and 30 minutes.

In embodiments, the curing step d) is performed by heating the hollow container at a temperature of from 150°C to 200°C, preferably from 170°C to 190°C for 5 to 20 minutes, preferably from 6 to 15 minutes.

Alternatively, the powder coatings may be treated with ultraviolet (UV) light, which typically allows for a fast melting and/or curing of the powder coating.

With the method of the present disclosure, a thicker barrier coating will be provided on the interior surface of the predetermined portion(s) of the hollow container. Exemplary predetermined portions are illustrated in figure 1 and are denoted 105a-d.

In figure 1, the hollow container 100 is shaped as a bottle. The upper portion 103 of the hollow container; i.e. the bottle, comprises a shoulder portion 103a and a neck portion 103b, wherein the neck portion 103b has a smaller cross-sectional area than the main portion 102 and is configured to circumferent at least the opening 106 of the bottle, and wherein the shoulder portion 103a is arranged to taper between the main portion 102 and the neck portion 103b.

The shoulder portion typically tapers at an angle of from about 5 to 75 degrees, e.g. from 20 to 60 degrees, between the main portion and the neck portion.

In embodiments, the neck portion 103b is threaded. A threaded neck portion may be beneficial in various bottle applications, but the present disclosure is by no means limited to the neck portion being threaded. In embodiments, where the neck portion 103b is threaded, the threaded portion may have a trapezoidal configuration; i.e. a "screw thread profile", which enables a cap to be screwed thereto.

The neck portion typically has a smaller cross-sectional area than the remaining parts of the upper portion 103 of the bottle.

The bottom portion 101, the main portion 102, and the upper portion 102 (comprising the neck portion and the shoulder portion) of the hollow container are formed integrally.

Figure 1 schematically illustrates examples of predetermined portion(s) of the hollow container 100. The predetermined portion may form part of the neck portion 103b (see 105a in figure 1), shoulder portion 103a (see 105b in figure 1), main portion 102 (not shown), and/or the bottom surface 104 (see 105c-d) of the hollow container 100.

Depending on the particular purpose or use of the hollow container, it may, in embodiments be desired to have a thicker coating in at least two different portions of the interior surface of the container.

Accordingly, in embodiments, the electrical conductivity is higher in at least two predetermined portions, wherein a first predetermined portion 105a forms part of the neck portion 103b, and wherein the second predetermined portion 105b-d forms part of the main portion 102, shoulder portion 103a or the bottom surface 104 of the hollow container during the polymeric powder deposition step b).

The at least one predetermined portion 105a-d of the hollow container 100 may be arranged in contact with a grounded electrically conductive material during the step b) of polymeric powder deposition.

As illustrated in figure 1, the electrically conductive material may be an electrically conductive wire, e.g. a metal wire 108 configured to be wrapped around the at least one predetermined portion 105a-d during the polymeric powder deposition step b).

The electrically conductive wire 108 may be wrapped around the predetermined portion 105a forming part of the neck portion 103b of the hollow container. Alternatively, or in addition, the electrically conductive wire 108 may be wrapped around the predetermined portion 105b forming part of the shoulder portion 103a of the hollow container.

The electrically conductive wire 108 may be wrapped to cover a larger surface area, e.g. to cover the predetermined portion 105b forming part of the shoulder portion 103a in figure 1.

Alternatively, the electrically conductive wire 108 may be wrapped to cover a smaller surface area, as illustrated with respect to the neck portion 103b in figure 1. In figure 1, the first predetermined portion 105a is larger than the second predetermined portion 105b.

As illustrated in figure 1, the predetermined portions 105c-d may form part of the bottom surface 104 of the hollow container 100.

In embodiments where a localized powder coating is desired in the bottom surface, the electrically conductive material may be at least one piece of electrically conductive material, e.g. metal arranged to contact the at least one predetermined portion 105a-d of the hollow container 100 during the polymeric powder deposition step b).

In figure 1, two pieces of electrically conductive material 110, e.g. two pieces of metal may be arranged to contact the predetermined portions 105c and 105d. The electrically conductive pieces 110 may form part of a support device 112. The support device may comprise an electrically insulating material, such as plastic, in the areas surrounding the electrically conductive pieces 110. This construction may be beneficial if a more localized barrier coating is desired. For example, this construction may be desirable to protect sharp dents and edges of the bottom surface 104.

The electrically conductive piece 110 is not limited to a particular size or shape. In embodiments, the electrically conductive piece is formed by a metal. A piece of electrically conductive material may also be arranged on the main portion 102 of the hollow container 100 (not shown). In this case, the size of the electrically conductive piece may be larger, and the purpose of providing a thicker interior coating in this portion may be to protect the area where a label or a print is to be arranged. A thicker coating may also be favorable to protect dents or sharp corners resulting from e.g. embossing or debossing.

As illustrated in figure 2a and 2b, the electrically conductive material is a grounded electrically conductive molding device 111 configured to enclose a portion of the main portion 102 and/or the shoulder portion 103a of the hollow container 100.

This may be desirable if a larger and more evenly distributed coating in the predetermined portion(s) is desired. The molding device may comprise any electrically conductive material, e.g. a metal, such as aluminum. Alternatively, the molding device comprises a formable electrically conductive material, such as an electrically conductive thermoplastic elastomeric co-polyester (TPC-ESD), an electrically conductive foam comprising e.g. polyurethane, an electrically conductive felt, such as a polyester fabric, or an electrically conductive rubber. The formable electrically conductive material may also be coated with a metal.

By securing efficient grounding an enclosing the main portion or the shoulder portion during the polymeric powder deposition step b), the electrical charge carried by the grounded surface will be spread across a larger area of the interior surface of the predetermined portion. Accordingly, an even powder coating will be applied across the interior surface of the predetermined portion of the hollow container.

In alternative embodiments, the molding device 111 may be configured to enclose the upper portion 103 or the bottom portion 101 of the hollow container.

In embodiments, the method further comprises the step of:
b') depositing a polymeric powder onto the exterior surface at least a portion of the upper portion 103 of the hollow container 100 by means of the spraying device.

The exterior surface of the upper portion, particularly the neck portion; i.e. the portion surrounding the opening of the container is preferably coated as this part of the container is exposed to a lot of moist and liquid.

Preferably, the polymeric powder deposition step b') is performed prior to the step c) of heating or irradiating the hollow container.

Accordingly, only one heating or irradiation step is required in the method.

Figure 2b illustrates the step of depositing a polymeric powder onto the exterior surface of the upper portion 103 of the container 100.

After the interior surface has been coated with polymeric powder, the spraying device is removed from the opening or the interior of the container. In the polymeric powder deposition step b) (illustrated in figure 2a), the spraying device may either be inserted into the opening or arranged in proximity of the opening during spraying.

Subsequently, the spraying device 107 is removed from the container opening and arranged at the distance, d1, from the opening of the container. The tip of the spraying spraying device, e.g. of the spraying nozzle 107a is typically arranged vertically from the opening of the container; i.e. along the longitudinal center line of the container. The axial distance, d1, from the tip of the spraying device to the opening of the container may be from 10 to 250 mm, e.g. from 40 to 150 mm. This is to secure coverage of the powder on a large surface of the neck portion (and of the upper portion) of the hollow container.

In embodiments, the polymeric powder deposition steps b) and c) are performed simultaneously.

This may be accomplished by arranging the tip of the spraying device 107 in proximity of the opening of the hollow container and along the longitudinal center line of the container. This way a flow of charged polymer powder particles is directed towards the interior surface of the hollow container, while also at least partly covering the exterior surface of the upper portion of the container.

The hollow container 100 may have a moisture content of from 3 to 15%, e.g. from 5 to 10% during the step b) of powder deposition.

If a more localized coating distribution is desired, the moisture content may be lower. If an even coating, distributed on a larger surface is desired, the moisture content may be higher. The polymeric powder barrier coating of the present disclosure may then be applied across the entire interior surface of the container, but will be thicker in the predetermined portions where the electrical conductivity is higher.

The method of the present disclosure may comprise an additional step of conditioning the hollow container at an ambient relative humidity of from 30 to 100% after step a).

The moisture content and the conditioning of the hollow container in the above mentioned ranges also allows for the exterior surface of the upper portion of the container to be coated directly after (or simultaneously with) the polymeric powder deposition step b) prior to curing or melting the polymeric powder. Accordingly, only one heating or irradiation step is required in the method.

The conditioning time may be at least 2 hours, e.g. at least 10 hours, preferably at least 15 hours at an ambient relative humidity of from 30 to 100%, e.g. from 50 to 95%, e.g. from 50 to 90%. The hollow container may be conditioned at room temperature.

The polymeric powder deposition step b) is typically performed directly after the step of conditioning to maintain the moisture content of the hollow container during powder coating.

The moisture content may be selectively steered and controlled depending on the size of the container, the use of the container and the specific purpose of the powder coating. For example, in some situations, it may be desired to provide a thick localized coating in a selected part; i.e. a predetermined portion of the container. In other circumstances, an evenly distributed coating is desired, but with localized thicker regions in specific parts; i.e. predetermined portions of the container. Also, the proportion of powder coating onto the exterior surface of the sidewalls of the upper container can be tailored and adapted to meet the particular needs and requirements.

According to another aspect, there is provided a hollow container, as defined in claim 13, wherein the hollow container 100 comprises a bottom portion 101, a main portion 102, and an upper portion 103, wherein the main portion 102 is arranged between the bottom portion 101 and the upper portion 103, wherein the hollow container comprises a bottom surface 104 and sidewalls 105 extending from the bottom surface 104 to an opening 106 of the hollow container; the sidewalls 105 and the bottom surface 104 defining an interior surface comprises a barrier coating comprising polymeric powder, wherein the thickness, t1, of the barrier coating in at least one predetermined portion of the hollow container is higher than the thickness, t2, of the barrier coating in the remaining portions of the hollow container 100.

The container is preferably formed by the method described hereinbefore.

As illustrated in figure 1, the upper portion 103 comprises a shoulder portion 103a and a neck portion 103b, wherein the neck portion 103b has a smaller cross-sectional area than the main portion 102 and is configured to circumferent at least the opening 106 of the container, and wherein the shoulder portion 103a is arranged to taper between the main portion 102 and the neck portion 103b, wherein the predetermined portion forms part of the neck portion 103b, shoulder portion 103a, main portion 102 or bottom surface 104 of the hollow container 100.

The thickness, t1, of the barrier coating of the at least one predetermined portion 105a-d is at least 10% higher, preferably at least 20% higher than the thickness, t2, of the barrier coating in the remaining portions of the hollow container.

For example, the thickness, t1, of the barrier coating in the predetermined portion may be in the range of from 10 to 200 µm, e.g. from 30 to 120 µm.

The thickness, t2, of the barrier coating in the remaining portions may be in the range of 5 to 150 µm, e.g. from 10 to 80 µm.

The thickness of the barrier coating means the thickness of the cured barrier coating; i.e. the thickness of the coating after the hollow container has been treated with heat or irradiation under conditions that melt and/or cure the polymeric powder.

The exterior surface of the of the upper portion 103 of the hollow container 100 may comprise a barrier coating.

This is to provide extra protection against liquid and moisture during use of the container and during manufacturing.

Preferably, the exterior surface of the main and the bottom portion of the bottle does is void of a barrier coating. This is to achieve a "raw" paper like appearance, free from gloss, on the exterior surface of the main portion of the container. Accordingly, only the most vulnerable portions of the container are provided with a barrier coating.

### Examples: Providing a non-uniform coating

The following materials and equipments were used in the trials:
- Sheets of paper Pure white 135gsm (A4 size, 210x297mm), conditioned at 20°C and 50% RH overnight (moisture content of about 7%).
- Sheets of paper Pure white 135gsm (A4 size, 210x297mm), conditioned at 20°C and 90%RH overnight (moisture content of about 14%).
- Polymeric powder: HDPE powder with a particle size distribution of 0-80 um
- Spray gun: Gema Volstatic Powder Gun Type PGC 1

Tests were performed to illustrate that the coating thickness can be optimized in predetermined portions of two different paper sheets by means of positioning one or a plurality of grounded and electrically conductive metal pieces to predetermined positions of the sheets.

The paper sheets were fastened on a plastic board. The plastic board was cut out in the portions where the grounded electrically conductive material (in this case metal pieces) were to be arranged.

Two different set-ups; i.e. trials were tested. In the first trial, one single metal piece (15x15mm) was placed in the center of the paper sheet. In the second trial, four (15x15mm) metal pieces were arranged close to the corners of the sheet to form of a square. The distance between each metal pieces was 150-200mm.

For the first trial, six sheets were tested, three of these were conditioned at 20°C and 50% RH (moisture content of about 7 %), and three sheets were conditioned at 20°C and 90% RH (moisture content of about 14 %).

For the second trial, seven sheets were tested, four sheets were conditioned at 20°C 50% RH, and three sheets were conditioned at 20°C and 90%RH.

All sheets were marked with 20 dots making a grid over the sheet surface. The thickness of the paper was measured twice at each dot, and reported, using an Elcometer 456.

The polymeric powder was sprayed onto the sheets at a distance of about 100 mm for a time period of three seconds, while moving the gun downwards. The weight of each sheet was measured before and after the spray sequence.

The sheets were subject to heat treatment in an oven at 180 ± 10°C for 10 min. After heat treatment, the thickness at each dot was again measured and reported.

In the first trial, for the sheets conditioned at 50% RH (moisture content of about 7 %), the coated area was concentrated to the position of the metal piece. The coating extended about 20 mm from the edges of the metal piece. The thickness at the 20 dots was measured. A coating thickness of about 100 µm was measured for the dots located at the metal piece.

For sheets conditioned in 90% RH (moisture content of about 14 %)u sing one centered metal piece, the coverage was better compared to the sheets conditioned at 50% RH. Almost the entire sheet was completely covered with powder. This is also confirmed in the thickness measurements. A gradient of coating thickness was observed where the coating at the metal piece was thicker by about 50% or more than the coating applied approximately 100 mm from the metal piece.

The same trend was observed in the second trial (comprising four different metal pieces). For a sheet conditioned in 50% RH the areas coated were concentrated to the positions of the metal pieces, and extended about 20 mm from the edges of the metal pieces. The thickness at the 20 dots were measured. Only the measurements situated at the metal pieces showed a significant coating thickness

For the sheets conditioned in 90% RH, the coverage was a lot better compared to 50% RH sheets. A surface area almost equal to the whole sheet is covered with powder. A gradient in the coating thickness is still observed. The measurements showed a coating thickness significantly higher at the metal pieces than at the dots further away from the metal pieces.

These results show that the deposition of polymeric powder can be selectively steered to particular portions and regions where a thicker coating is desired. Furthermore, these results show that the relative humidity and the moisture content impacts the distribution or coverage of the powder coating. Accordingly, the relative humidity and moisture content may be tailored depending on whether a more localized or a more distributed coating is desired.

## Claims

1. A method for providing a non-uniform barrier coating on a hollow container comprising:
a) providing a hollow container (100) comprising molded pulp, wherein said hollow container (100) comprises a bottom portion (101), a main portion (102) and an upper portion (103), wherein said main portion (102) is arranged between said bottom portion (101) and said upper portion (103), wherein said hollow container comprises a bottom surface (104) and sidewalls (105) extending from said bottom surface (104) to an opening (106) of said hollow container; said sidewalls (105) and said bottom surface (104) defining an exterior surface and an interior surface of said hollow container,
b) depositing a polymeric powder onto said interior surface in at least one predetermined portion (105a-d) of said hollow container by means of a spraying device (107) capable of charging the polymeric powder prior to or during deposition of said polymeric powder,
c) treating said hollow container with heat or irradiation under conditions that melt and/or cure said polymeric powder,
**characterized in that** the electrical conductivity of said at least one predetermined portion (105a-d) is higher than the electrical conductivity of the remaining portions of said hollow container during said polymeric powder deposition step b), and wherein the thickness, t1, of said barrier coating in said at least one predetermined portion (105a-d) is at least 10%, preferably at least 20% higher than the thickness, t2, of said barrier coating in the remaining portions of said container (105).

2. The method according to claim 1, wherein said hollow container extends along a longitudinal center line (109), wherein the longitudinal extension of said upper portion (103) corresponds to 5-30% of the maximum longitudinal extension of said hollow container (100), the longitudinal extension of said main portion (102) corresponds to 40-80% of the maximum longitudinal extension of said hollow container (100), and the longitudinal extension of said upper portion (103) corresponds to 5-30% of the maximum longitudinal extension of said hollow container (100).

3. The method according to claim 1 or claim 2, wherein said at least one predetermined portion (105a-d) of said hollow container (100) is arranged in contact with a grounded electrically conductive material during said step b) of polymeric powder deposition.

4. The method according to any one of the preceding claims, wherein said at least one predetermined portion (105a-d) forms part of said upper portion (103), main portion (102), and/or said bottom surface (104) of said hollow container (100).

5. The method according to any one of the preceding claims, wherein said upper portion (103) of said hollow container comprises a shoulder portion (103a) and a neck portion (103b); wherein said neck portion (103b) has a smaller cross-sectional area than said main portion (102) and is configured to circumferent at least said opening (106) of said container, and wherein said shoulder portion (103a) is arranged to taper between said main portion (102) and said neck portion (103b).

6. The method according to claim 5, wherein the electrical conductivity is higher in at least two predetermined portions of said hollow container, wherein a first predetermined portion (105a) forms part of said neck portion (103b), and wherein said second predetermined portion (105b-d) forms part of said main portion (102), shoulder portion (103a) and/or said bottom surface (104) of said hollow container during said polymeric powder deposition step b).

7. The method according to claim 3 or any one of claims 4-6, when dependent on claim 3, wherein said electrically conductive material is an electrically conductive wire, e.g. a metal wire (108) configured to be wrapped around said at least one predetermined portion (105a-d) of said hollow container during said polymeric powder deposition step b).

8. The method according to claim 3 or any one of claims 4-7 when dependent on claim 3, wherein said electrically conductive material is an electrically conductive molding device (111) configured to enclose said at least one predetermined portion (105a-d) during said polymeric powder deposition step b), wherein said at least one predetermined portion forms part of said main portion (102) and/or said shoulder portion (103a) of said hollow container (100).

9. The method according to any one of the preceding claims, wherein said method further comprises the step of:
b') depositing a polymeric powder onto the exterior surface of at least a portion of said upper portion (103) of said hollow container (100) by means of said spraying device.

10. The method according to claim 9, wherein said polymeric powder deposition step b') is performed prior to said step c) of heating or irradiating said hollow container.

11. The method according to any one of the preceding claims, wherein said hollow container has a moisture content of from 3 to 15 %, e.g. from 5 to 10 % during said step b) of powder deposition.

12. The method according to any on one of the preceding claims, further comprising the step of:
a') conditioning the hollow container at an ambient relative humidity of from 30 to 100% after step a) of providing a hollow container comprising molded pulp.

13. A hollow container comprising molded pulp, wherein said hollow container (100) comprises a bottom portion (101), a main portion (102), and an upper portion (103), wherein said main portion (102) is arranged between said bottom portion (101) and said upper portion (103), wherein said hollow container comprises a bottom surface (104) and sidewalls (105) extending from said bottom surface (104) to an opening (106) of said hollow container; said sidewalls (105) and said bottom surface (104) defining an exterior surface and an interior surface of said hollow container, wherein said interior surface comprises a barrier coating comprising a polymeric powder, wherein the thickness, t1, of said barrier coating in at least one predetermined portion of the hollow container is higher than the thickness, t2, of said barrier coating in the remaining portions of said hollow container (100), wherein the thickness, t1, of said barrier coating in said at least one predetermined portion (105a-d) is at least 10%, preferably at least 20% higher than the thickness, t2, of said barrier coating in the remaining portions of said container (105).

14. The hollow container according to claim 13, wherein said upper portion (103) comprises a shoulder portion (103a) and a neck portion (103b), wherein said neck portion (103b) has a smaller cross-sectional area than said main portion (102) and is configured to circumferent at least said opening (106) of said container, and wherein said shoulder portion (103a) is arranged to taper between said main portion (102) and said neck portion (103b), wherein said predetermined portion forms part of said neck portion (103b), shoulder portion (103a), main portion (102) or bottom surface (104) of said hollow container (100).

15. The hollow container according to 13 or claim 14, wherein the exterior surface of at least a portion of said upper portion (103) of said hollow container (100) comprises a barrier coating.

## Patentansprüche

1. Verfahren zur Bereitstellung einer ungleichmäßigen Sperrbeschichtung auf einem hohlen Behälter, umfassend
a) das Bereitstellen eines hohlen Behälters (100) aus geformter Pulpe, wobei der hohle Behälter (100) einen unteren Abschnitt (101), einen Hauptabschnitt (102) und einen oberen Abschnitt (103) aufweist, wobei der Hauptabschnitt (102) zwischen dem unteren Abschnitt (101) und dem oberen Abschnitt (103) angeordnet ist, wobei der hohle Behälter eine Bodenfläche (104) und Seitenwände (105), die sich von der Bodenfläche (104) zu einer Öffnung (106) des hohlen Behälters erstrecken, aufweist; wobei die Seitenwände (105) und die Bodenfläche (104) eine Außenfläche und eine Innenfläche des hohlen Behälters definieren,
b) das Ablagern eines Polymerpulvers in wenigstens einem vorherbestimmten Abschnitt (105a bis d) des hohlen Behälters auf der Innenfläche durch eine Sprühvorrichtung (107), die das Polymerpulver vor oder während des Ablagerns des Polymerpulvers aufladen kann,
c) das Behandeln des hohlen Behälters mit Wärme oder durch eine Bestrahlung unter Bedingungen, die das Polymerpulver schmelzen und/oder härten,
**dadurch gekennzeichnet, dass** die elektrische Leitfähigkeit des wenigstens einen vorherbestimmten Abschnitts (105a bis d) während des Schritts b) des Ablagerns des Polymerpulvers höher als die elektrische Leitfähigkeit der restlichen Abschnitte des hohlen Behälters ist, und wobei die Dicke t1 der Sperrbeschichtung in dem wenigstens einen vorherbestimmten Abschnitt (105a bis d) um wenigstens 10 %, vorzugsweise um wenigstens 20 %, höher als die Dicke t2 der Sperrbeschichtung in den restlichen Abschnitten des Behälters (105) ist.

2. Verfahren nach Anspruch 1, wobei sich der hohle Behälter entlang einer Längsmittellinie (109) erstreckt, wobei die Längsausdehnung des oberen Abschnitts (103) 5 bis 30 % der maximalen Längsausdehnung des hohlen Behälters (100) entspricht, die Längsausdehnung des Hauptabschnitts (102) 40 bis 80 % der maximalen Längsausdehnung des hohlen Behälters (100) entspricht, und die Längsausdehnung des oberen Abschnitts (103) 5 bis 30 % der maximalen Längsausdehnung des hohlen Behälters (100) entspricht.

3. Verfahren nach Anspruch 1 oder Anspruch 2, wobei der wenigstens eine vorherbestimmte Abschnitt (105a bis d) des hohlen Behälters (100) während des Schritts b) des Ablagerns des Polymerpulvers in einem Kontakt mit einem geerdeten elektrisch leitfähigen Material angeordnet ist.

4. Verfahren nach einem der vorhergehenden Ansprüche, wobei der wenigstens eine vorherbestimmte Abschnitt (105a bis d) einen Teil des oberen Abschnitts (103), des Hauptabschnitts (102) und/oder der Bodenfläche (104) des hohlen Behälters (100) bildet.

5. Verfahren nach einem der vorhergehenden Ansprüche, wobei der obere Abschnitt (103) des hohlen Behälters einen Schulterabschnitt (103a) und einen Halsabschnitt (103b) aufweist; wobei der Halsabschnitt (103b) eine kleinere Querschnittfläche als der Hauptabschnitt (102) aufweist und so ausgeführt ist, dass er wenigstens die Öffnung (106) des Behälters umgibt, und wobei der Schulterabschnitt (103a) so angeordnet ist, dass er sich zwischen dem Hauptabschnitt (102) und dem Halsabschnitt (103b) verjüngt.

6. Verfahren nach Anspruch 5, wobei während des Schritts b) des Ablagerns des Polymerpulvers die elektrische Leitfähigkeit in wenigstens zwei vorherbestimmten Abschnitten des hohlen Behälters höher ist, wobei ein erster vorherbestimmter Abschnitt (105a) einen Teil des Halsabschnitts (103b) bildet, und wobei der zweite vorherbestimmte Abschnitt (105b bis d) einen Teil des Hauptabschnitts (102), des Schulterabschnitts (103a) und/oder der Bodenfläche (104) des hohlen Behälters bildet.

7. Verfahren nach Anspruch 3 oder einem der Ansprüche 4 bis 6, wenn dieser von Anspruch 3 abhängt, wobei das elektrisch leitfähige Material ein elektrisch leitfähiger Draht, z.B. ein Metalldraht (108), ist, der so ausgeführt ist, dass er während des Schritts b) des Ablagerns des Polymerpulvers um den wenigstens einen vorherbestimmten Abschnitt (105a bis d) des hohlen Behälters geschlungen ist.

8. Verfahren nach Anspruch 3 oder einem der Ansprüche 4 bis 7, wenn dieser von Anspruch 3 abhängt, wobei das elektrisch leitfähige Material eine elektrisch leitfähige Formvorrichtung (111) ist, die so ausgeführt ist, dass sie den wenigstens einen vorherbestimmten Abschnitt (105a bis d) während des Schritts b) des Ablagerns des Polymerpulvers umschließt, wobei der wenigstens eine vorherbestimmte Abschnitt einen Teil des Hauptabschnitts (102) und/oder des Schulterabschnitts (103a) des hohlen Behälters (100) bildet.

9. Verfahren nach einem der vorhergehenden Ansprüche, wobei das Verfahren ferner einen Schritt
b') des Ablagerns eines Polymerpulvers auf der Außenfläche wenigstens eines Teils des oberen Abschnitts (103) des hohlen Behälters (100) durch die Sprühvorrichtung umfasst.

10. Verfahren nach Anspruch 9, wobei der Schritt b') des Ablagerns des Polymerpulvers vor dem Schritt c) des Erhitzens oder Bestrahlens des hohlen Behälters durchgeführt wird.

11. Verfahren nach einem der vorhergehenden Ansprühe, wobei der hohle Behälter während des Schritts b) des Ablagerns des Pulvers einen Feuchtigkeitsgehalt von 3 bis 15 %, z.B. von 5 bis 10 %, aufweist,

12. Verfahren nach einem der vorhergehenden Ansprüche, ferner umfassend einen Schritt
a') des Konditionierens des hohlen Behälters bei einer relativen Umgebungsfeuchtigkeit von 30 bis 100 % nach dem Schritt a) des Bereitstellens eines hohlen Behälters aus geformter Pulpe.

13. Hohler Behälter aus geformter Pulpe, wobei der hohle Behälter (100) einen unteren Abschnitt (101), einen Hauptabschnitt (102) und einen oberen Abschnitt (103) aufweist, wobei der Hauptabschnitt (102) zwischen dem unteren Abschnitt (101) und dem oberen Abschnitt (103) angeordnet ist, wobei der hohle Behälter eine Bodenfläche (104) und Seitenwände (105), die sich von der Bodenfläche (104) zu einer Öffnung (106) des hohlen Behälters erstrecken, aufweist; wobei die Seitenwände (105) und die Bodenfläche (104) eine Außenfläche und eine Innenfläche des hohlen Behälters definieren, wobei die Innenfläche eine Sperrbeschichtung aufweist, die ein Polymerpulver enthält, wobei die Dicke t1 der Sperrbeschichtung in wenigstens einem vorherbestimmten Abschnitt des hohlen Behälters höher als die Dicke t2 der Sperrbeschichtung in den restlichen Abschnitten des hohlen Behälters (100) ist, wobei die Dicke t1 der Sperrbeschichtung in dem wenigstens einen vorherbestimmten Abschnitt (105a bis d) um wenigstens 10 %, vorzugsweise um wenigstens 20 %, höher als die Dicke t2 der Sperrbeschichtung in den restlichen Abschnitten des Behälters (105) ist.

14. Hohler Behälter nach Anspruch 13, wobei der obere Abschnitt (103) einen Schulterabschnitt (103a) und einen Halsabschnitt (103b) aufweist, wobei der Halsabschnitt (103b) eine kleinere Querschnittfläche als der Hauptabschnitt (102) aufweist und so ausgeführt ist, dass er wenigstens die Öffnung (106) des Behälters umgibt, und wobei der Schulterabschnitt (103a) so angeordnet ist, dass er sich zwischen dem Hauptabschnitt (102) und dem Halsabschnitt (103b) verjüngt, wobei der vorherbestimmte Abschnitt einen Teil des Halsabschnitts (103b), des Schulterabschnitts (103a), des Hauptabschnitts (102) oder der Bodenfläche (104) des hohlen Behälters (100) bildet.

15. Hohler Behälter nach Anspruch 13 oder Anspruch 14, wobei die Außenfläche wenigstens eines Teils des oberen Abschnitts (103) des hohlen Behälters (100) eine Sperrbeschichtung aufweist.

## Revendications

1. Procédé de fourniture d'un revêtement de barrière non uniforme sur un récipient creux comportant :
a) de fournir un récipient creux (100) comprenant de la pulpe moulée, dans lequel le récipient creux (100) comprend une partie inférieure (101), une partie principale (102) et une partie supérieure (103), dans lequel ladite partie principale (102) est agencée entre ladite partie inférieure (101) et ladite partie supérieure (103), dans lequel ledit récipient creux comprend une surface inférieure (104) et des parois latérales (105) s'étendant de ladite surface inférieure (104) vers une ouverture (106) dudit récipient creux ; lesdites parois latérales (105) et ladite surface inférieure (104) définissant une surface extérieure et une surface intérieure dudit récipient creux ;
b) de déposer une poudre polymère sur ladite surface intérieure dans au moins une partie prédéterminée (105a-d) dudit récipient creux au moyen d'un dispositif de pulvérisation (107) capable de charger la poudre polymère avant ou pendant le dépôt de ladite poudre polymère,
c) de traiter ledit récipient creux par la chaleur ou l'irradiation dans des conditions qui effectuent la fonte et/ou la cuisson de ladite poudre polymère,
**caractérisé en ce que** la conductivité électrique de ladite au moins une partie prédéterminée (105a-d) est supérieure à la conductivité électrique des parties restantes dudit récipient creux pendant ladite étape b) de dépôt de poudre polymère, et dans lequel l'épaisseur, t1, dudit revêtement de barrière dans ladite au moins une partie prédéterminée (105a-d) est d'au moins 10 %, de préférence d'au moins 20 % supérieure à l'épaisseur, t2, dudit revêtement de barrière dans les parties restantes dudit récipient (105).

2. Procédé selon la revendication 1, dans lequel ledit récipient creux s'étend le long d'une ligne centrale longitudinale (109), dans lequel l'extension longitudinale de ladite partie supérieure (103) correspond à 5-30 % de l'extension longitudinale maximale dudit récipient creux (100), l'extension longitudinale de ladite partie principale (102) correspond à 40-80 % de l'extension longitudinale maximale dudit récipient creux (100) et l'extension longitudinale de ladite partie supérieure (103) correspond à 5-30 % de l'extension longitudinale maximale dudit récipient creux (100).

3. Procédé selon la revendication 1 ou la revendication 2, dans lequel ladite au moins une partie prédéterminée (105a-d) dudit récipient creux (100) est agencée en contact avec un matériau conducteur électrique mis à la terre pendant ladite étape b) de dépôt de poudre polymère.

4. Procédé selon l'une quelconque revendication précédente, dans lequel ladite au moins une partie prédéterminée (105a-d) fait partie de ladite partie supérieure (103), partie principale (102) et/ou ladite partie inférieure (104) dudit récipient creux (100).

5. Procédé selon l'une quelconque des revendications précédentes, dans lequel ladite partie supérieure (103) dudit récipient creux comprend une partie d'épaulement (103a) et une partie de goulot (103b), dans lequel ladite partie de goulot (103b) présente une aire transversale plus petite que ladite partie principale (102) et est configurée pour entourer au moins ladite ouverture (106) dudit récipient, et dans lequel ladite partie d'épaulement (103a) est agencée pour se réduire de façon conique entre ladite partie principale (102) et ladite partie de goulot (103b).

6. Procédé selon la revendication 5, dans lequel la conductivité électrique est supérieure dans au moins deux parties prédéterminées dudit récipient creux, dans lequel une première partie prédéterminée (105a) fait partie de ladite partie de goulot (103b) et dans lequel ladite seconde partie prédéterminée (105b-d) fait partie de ladite partie principale (102), partie d'épaulement (103a) et/ou ladite partie inférieure (104) dudit récipient creux pendant ladite étape b) de dépôt de poudre polymère.

7. Procédé selon la revendication 3 ou selon l'une quelconque des revendications 4-6, lorsque dépendante de la revendication 3, dans lequel ledit matériau conducteur électrique est un fil conducteur électrique, par exemple un fil métallique (108) configuré pour être enroulé autour de ladite au moins une partie prédéterminée (105a-d) dudit récipient creux pendant ladite étape b) de dépôt de poudre polymère.

8. Procédé selon la revendication 3 ou selon l'une quelconque des revendications 4-7, lorsque dépendante de la revendication 3, dans lequel ledit matériau conducteur électrique est un dispositif de moulage conducteur électrique (111) configuré pour enchâsser au moins une partie prédéterminée (105a-d) pendant ladite étape b) de dépôt de poudre polymère, dans lequel ladite au moins une partie prédéterminée fait partie de ladite partie principale (102) et/ou ladite partie d'épaulement (103a) dudit récipient creux (100).

9. Procédé selon l'une quelconque revendication précédente, dans lequel ledit procédé comprend en outre l'étape de :
b') déposer une poudre polymère sur la surface extérieure d'au moins une partie de ladite partie supérieure (103) dudit récipient creux (100) au moyen dudit dispositif de pulvérisation.

10. Procédé selon la revendication 9, dans lequel ladite étape b') de dépôt de poudre polymère est exécutée avant ladite étape c) de chauffer ou d'irradier ledit récipient creux.

11. Procédé selon l'une quelconque revendication précédente, dans lequel ledit récipient creux présente une teneur en humidité de 3 à 15 %, par ex. de 5 à 10 % pendant ladite étape b) de dépôt de poudre polymère.

12. Procédé selon l'une quelconque revendication précédente, comprenant en outre l'étape de :
a') conditionner le récipient creux à une humidité ambiante relative de 30 à 100 % après l'étape a) de fourniture d'un récipient creux comportant de la pulpe moulée.

13. Récipient creux comportant de la pulpe moulée, dans lequel ledit récipient creux (100) comprend une partie inférieure (101), une partie principale (102) et une partie supérieure (103), dans lequel ladite partie supérieure (102) est agencée entre ladite partie inférieure (101) et ladite partie supérieure (103), dans lequel ledit récipient creux comprend une surface inférieure (104) et des parois latérales (105) s'étendant de ladite surface inférieure (104) à une ouverture (106) dudit récipient creux ; lesdites parois latérales (105) et ladite surface inférieure (104) définissant une surface extérieure et une surface intérieure dudit récipient creux, dans lequel ladite surface intérieure comprend un revêtement de barrière comprenant une poudre polymère, dans lequel l'épaisseur, t1, dudit revêtement de barrière dans au moins une partie prédéterminée du récipient creux est supérieure à l'épaisseur, t2, dudit revêtement de barrière dans les parties restantes dudit récipient creux (100), dans lequel l'épaisseur t1, dudit revêtement de barrière dans ladite au moins une partie prédéterminée (105a-d) est d'au moins 10 %, de préférence d'au moins 20 % supérieure à l'épaisseur, t2, dudit revêtement de barrière dans les parties restantes dudit récipient (105).

14. Récipient creux selon la revendication 13, dans lequel ladite partie supérieure (103) comprend une partie d'épaulement (103a) et une partie de goulot (103b), dans lequel ladite partie de goulot (103b) présente une aire transversale plus petite que ladite partie principale (102) et est configurée pour entourer au moins ladite ouverture (106) dudit récipient, et dans lequel ladite partie d'épaulement (103a) est agencée pour se réduire de façon conique entre ladite partie principale (102) et ladite partie de goulot (103b), dans lequel ladite partie prédéterminée fait partie de ladite partie de col (103b), partie d'épaulement (103a), partie principale (102) ou partie inférieure (104) dudit récipient creux (100).

15. Récipient creux selon la revendication 13 ou la revendication 14, dans lequel la surface extérieure d'au moins une partie de ladite partie supérieure (103) dudit récipient creux (100) comprend un revêtement de barrière.
